# EUROPÄISCHE PATENTANMELDUNG

(11) **EP 3 321 061 A1**
(43) Veröffentlichungstag der Anmeldung: **16.05.2018**
(21) Anmeldenummer: 16198939.7
(22) Anmeldetag: 15.11.2016
(51) Int. Cl.: B29C 47/08, B29C 47/68

(54) **SIEBWECHSELVORRICHTUNG ZUM FILTRIEREN EINER KUNSTSTOFF-SCHMELZE UND VERFAHREN ZUM BETREIBEN EINER DERARTIGEN SIEBWECHSELVORRICHTUNG**

(71) Anmelder: Coperion GmbH, 70469 Stuttgart (DE)
(72) Erfinder: Kühn, Ralf, Dr., 74391 Erligheim (DE)
(74) Vertreter: Rau, Schneck & Hübner Patentanwälte Rechtsanwälte PartGmbB

(57) **Zusammenfassung**

Eine Siebwechselvorrichtung (1) zum Filtrieren einer Kunststoff-Schmelze (S) weist ein Gehäuse (2) mit einer Führungsausnehmung (3) auf, in der ein erstes Schiebeelement (4) und ein zweites Schiebeelement (5) quer zu einer Strömungsrichtung (6) der Kunststoff-Schmelze (S) nebeneinander angeordnet sind. In die Führungsausnehmung (3) münden ein Zufuhrkanal (8) und ein Abfuhrkanal (9), die in der Strömungsrichtung (6) verlaufen und in dem Gehäuse (2) ausgebildet sind. Jedes der Schiebeelemente (4, 5) bildet einen Verbindungskanal (16, 17) aus, der den Zufuhrkanal (8) mit dem Abfuhrkanal (9) verbindet. In dem jeweiligen Verbindungskanal (16, 17) ist eine Siebeinrichtung (20, 21) zum Filtrieren der Kunststoff-Schmelze (S) angeordnet. Bei einem Siebwechsel werden die Schiebeelemente (4, 5) gemeinsam und dicht gegeneinander anliegend in der Führungsausnehmung (3) verlagert. Für die Wartung einer verstopften Siebeinrichtung (20, 21) wird ausschließlich das zugehörige Schiebeelement (4, 5) verlagert. Die Siebwechselvorrichtung (1) ist einfach aufgebaut und einfach zu betreiben. Bei einem Siebwechsel ist der Druckverlust der KunststoffSchmelze (S) gering.

## Beschreibung

Die Erfindung betrifft eine Siebwechselvorrichtung zum Filtrieren einer Kunststoff-Schmelze gemäß dem Oberbegriff des Anspruchs 1. Ferner betrifft die Erfindung ein Verfahren zum Betreiben einer derartigen Siebwechselvorrichtung.

Aus der DE 10 2004 012 617 A1 ist eine Siebwechselvorrichtung zum Filtrieren einer Kunststoff-Schmelze bekannt. Die Siebwechselvorrichtung weist ein Gehäuse auf, in dem ein Zufuhrkanal und ein Abfuhrkanal ausgebildet ist, die in eine Gehäusebohrung münden. In der Gehäusebohrung ist ein Bolzen fluiddicht und verschiebbar angeordnet. In dem Bolzen sind in einer Verlagerungsrichtung nebeneinander mehrere Durchtrittsöffnungen ausgebildet, in denen jeweils ein Filter zum Filtrieren der Kunststoff-Schmelze angeordnet ist. Nachteilig bei der bekannten Siebwechselvorrichtung ist, dass diese im Aufbau und in der Wartung aufwendig ist und im Betrieb einen unerwünschten Druckverlust der Kunststoff-Schmelze verursacht.

Der Erfindung liegt die Aufgabe zugrunde, eine einfach aufgebaute und einfach zu betreibende Siebwechselvorrichtung zu schaffen, die einen geringen Druckverlust der Kunststoff-Schmelze verursacht.

Diese Aufgabe wird durch eine Siebwechselvorrichtung mit den Merkmalen des Anspruchs 1 gelöst. In der gemeinsamen Führungsausnehmung sind zwei separate Schiebeelemente in einer Verlagerungsrichtung, also quer zu der Strömungsrichtung der Kunststoff-Schmelze, nebeneinander angeordnet. Jedes der Schiebeelemente bildet einen Verbindungskanal mit einer darin angeordneten Siebeinrichtung aus, um den Zufuhrkanal mit dem Abfuhrkanal zu verbinden und die durch den Verbindungskanal strömende Kunststoff-Schmelze mittels der jeweiligen Siebeinrichtung zu filtrieren. Dadurch, dass die Schiebeelemente separat voneinander ausgebildet sind, sind diese wahlweise gemeinsam oder unabhängig voneinander verlagerbar. Es ist somit wahlweise ein gemeinsames bzw. zeitgleiches Verlagern beider Schiebeelemente oder ein ausschließliches Verlagern des ersten Schiebeelements oder ein ausschließliches Verlagern des zweiten Schiebeelements möglich. Dadurch, dass die Schiebeelemente unabhängig voneinander verlagerbar sind, ist eine einfache Wartung möglich. Die zu wartende Siebeinrichtung wird in einfacher Weise mittels des zugehörigen Schiebeelements außerhalb der Führungsausnehmung angeordnet, sodass die zu wartende Siebeinrichtung frei zugänglich ist. Die in Betrieb befindliche Siebeinrichtung wird hierdurch nicht beeinträchtigt, da das zugehörige Schiebeelement in seiner Betriebsposition verbleibt. Da die Schiebeelemente unabhängig voneinander verlagerbar sind, ist es ausreichend, wenn jedes Schiebeelement lediglich einen Verbindungskanal mit einer darin angeordneten Siebeinrichtung aufweist. Der Aufbau der Siebwechselvorrichtung wird hierdurch vereinfacht. Zum Wechseln der Siebeinrichtung werden die Schiebeelemente gemeinsam und dicht gegeneinander anliegend in der Führungsausnehmung verlagert. Die zu filtrierende Kunststoff-Schmelze wird während des Siebwechselvorgangs durch die Siebeinrichtungen des ersten Schiebeelements und des zweiten Schiebeelements gefördert, sodass der Druckverlust der Kunststoff-Schmelze bei dem Siebwechselvorgang nicht erhöht wird.

Die jeweilige Siebeinrichtung umfasst vorzugsweise ein Tragelement mit Durchgangsöffnungen und mindestens einen Filter, der in der Strömungsrichtung vor dem Tragelement angeordnet ist. Vorzugsweise umfasst die Siebeinrichtung mehrere kerzenförmige bzw. patronenförmige Filter, die jeweils an dem Tragelement befestigt und in Strömungsverbindung mit einer zugehörigen Durchgangsöffnung sind. Die kerzenförmigen Filter sind vorzugsweise lösbar, beispielsweise mit einer Gewindeverbindung in einer zugehörigen Durchgangsöffnung befestigt. Der jeweilige Filter weist mindestens einen Stützkörper mit einem zugehörigen Filterelement auf. Der jeweilige Filter weist vorzugsweise einen äußeren Stützkörper mit einem äußeren Filterelement und einen inneren Stützkörper mit einem inneren Filterelement auf, sodass eine vergleichsweise große Filterfläche bereitgestellt und ein geringer Druckverlust erzielt wird.

Eine Siebwechselvorrichtung nach Anspruch 2 gewährleistet einen einfachen Aufbau und einen einfachen Betrieb. Die Dichtwände der Schiebeelemente liegen bei einem Siebwechselvorgang dicht gegeneinander an und bilden eine Dichtfläche aus, sodass bei einem Siebwechselvorgang keine Kunststoff-Schmelze zwischen die Schiebeelemente bzw. die Dichtwände gelangt. Die Dichtwände bilden die Dichtfläche beispielsweise durch aneinander liegende Kontaktflächen aus, die eine geringe Oberflächenrauigkeit haben. Zusätzlich können Dichtungselemente vorgesehen sein, wie beispielsweise eine Dichtungsnut mit einer darin angeordneten elastischen Dichtung.

Eine Siebwechselvorrichtung nach Anspruch 3 gewährleistet einen geringen Druckverlust der Kunststoff-Schmelze bei einem Siebwechselvorgang. Die Wanddicke d gewährleistet einerseits eine ausreichende Stabilität der jeweiligen Dichtwand und andererseits einen geringen Druckverlust der Kunststoff-Schmelze, da das Einströmen der Kunststoff-Schmelze in die Verbindungskanäle durch die dem Zufuhrkanal zugewandten Stirnflächen der aneinander liegenden Dichtwände im Wesentlichen nicht beeinträchtigt wird.

Eine Siebwechselvorrichtung nach Anspruch 4 gewährleistet einen einfachen Betrieb. Bei einem Siebwechselvorgang werden die Schiebeelemente gemeinsam mittels der Betätigungseinrichtung verlagert, wohingegen nach einem Siebwechselvorgang, also im Normalbetrieb, zum Zwecke der Wartung lediglich das Schiebeelement mit der zu wartenden Siebeinrichtung mittels der Betätigungseinrichtung verlagert wird.

Eine Siebwechselvorrichtung nach Anspruch 5 gewährleistet einen einfachen Aufbau. Jedes der Schiebeelemente weist einen eigenen Betätigungsantrieb auf, sodass die Betätigungsantriebe vergleichsweise klein dimensionierbar sind. Zudem ist die mechanische Kopplung des jeweiligen Betätigungsantriebs mit dem zugehörigen Schiebeelement einfach, da der Betätigungsantrieb dauerhaft in einem gekoppelten Zustand verbleiben kann. Zum gemeinsamen Verlagern werden beide Betätigungsantriebe aktiviert. Hierbei können die Betätigungsantriebe bei einem Siebwechselvorgang derart betrieben werden, dass die Schiebeelemente mit einer gewünschten Anpresskraft gegeneinander dicht anliegen.

Eine Siebwechselvorrichtung nach Anspruch 6 gewährleistet einen einfachen Aufbau. Die Betätigungseinrichtung weist lediglich einen Betätigungsantrieb auf, der mittels einer Kopplungsmechanik wahlweise mit beiden Schiebeelementen oder ausschließlich mit dem ersten Schiebeelement oder ausschließlich mit dem zweiten Schiebeelement koppelbar ist. Die Kopplungsmechanik weist beispielsweise einen mittels des Betätigungsantriebs verschiebbaren Steuerkolben auf, der durch unabhängig voneinander betätigbare Koppelelemente mit dem ersten Schiebeelement und/oder dem zweiten Schiebeelement verbindbar bzw. koppelbar ist. Die Kopplungsmechanik ist beispielsweise derart ausgebildet, dass bei einer Kopplung beider Schiebeelemente mit dem Betätigungsantrieb die Schiebeelemente mit ihren Dichtwänden gegeneinander gepresst werden und dicht gegeneinander anliegen. Die Koppelelemente werden beispielsweise durch eine Linearbewegung und/oder eine Drehbewegung mit dem jeweils zugehörigen Schiebeelement gekoppelt. Zum Eingreifen der Koppelelemente weisen die Schiebeelemente eine jeweilige Ausnehmung auf.

Eine Siebwechselvorrichtung nach Anspruch 7 gewährleistet einen einfachen Betrieb. In dem Siebwechselmodus werden die Schiebeelemente gemeinsam und dicht gegeneinander anliegend mittels der Betätigungseinrichtung verlagert, sodass die verstopfte und zu wartende Siebeinrichtung in einfacher Weise durch die betriebsbereite Siebeinrichtung ersetzt wird. Durch die betriebsbereite Siebeinrichtung wird der Druckverlust der Kunststoff-Schmelze reduziert. In dem Wartungsmodus wird die außer Betrieb befindliche und zu wartende Siebeinrichtung in einfacher Weise außerhalb der Führungsausnehmung und frei zugänglich angeordnet, indem mittels der Betätigungseinrichtung ausschließlich das Schiebeelement mit der zu wartenden Siebeinrichtung verlagert wird und das Schiebelement mit der betriebsbereiten Siebeinrichtung in seiner Betriebsposition verbleibt.

Eine Siebwechselvorrichtung nach Anspruch 8 gewährleistet einen einfachen Aufbau. Dadurch, dass jeder Verbindungskanal durch eine Trennwand in mehrere Teil-Verbindungskanäle unterteilt ist, die in einer Verlagerungsrichtung nebeneinander angeordnet sind, ist ein einfacherer Aufbau des Gehäuses möglich. Aufgrund der Unterteilung des jeweiligen Verbindungskanals ist es möglich, das Gehäuse in der Verlagerungsrichtung der Schiebeelemente schmaler auszubilden, da bei einem Siebwechselvorgang eine Abdichtung der mit der Kunststoff-Schmelze gefüllten Verbindungskanäle lediglich bis zu der Trennwand erforderlich ist. Anders ausgedrückt, müssen bei einem Siebwechselvorgang lediglich die mit der Kunststoff-Schmelze gefüllten Teil-Verbindungskanäle mittels des Gehäuses abgedichtet werden. Der jeweilige Verbindungskanal weist mindestens eine Trennwand zur Ausbildung von zwei Teil-Verbindungskanälen, und insbesondere mindestens zwei Trennwände zur Ausbildung von mindestens drei Teil-Verbindungskanälen auf.

Eine Siebwechselvorrichtung nach Anspruch 9 gewährleistet einen einfachen Aufbau und einen geringen Druckverlust der Kunststoff-Schmelze. Die Wanddicke t gewährleistet einerseits eine ausreichende Stabilität zur Ausbildung der Teil-Verbindungskanäle und andererseits einen geringen Druckverlust bei einem Siebwechselvorgang, da die Strömung der Kunststoff-Schmelze durch die dem Zufuhrkanal zugewandte Stirnseite der Trennwand im Wesentlichen nicht beeinträchtigt wird.

Eine Siebwechselvorrichtung nach Anspruch 10 gewährleistet einen geringen Druckverlust. Dadurch, dass sich die jeweilige Trennwand in Richtung zu dem Zufuhrkanal verjüngt, wird die in den Verbindungskanal einströmende Kunststoff-Schmelze in einfacher Weise um die jeweilige Trennwand in die Teil-Verbindungskanäle gelenkt, sodass der Druckverlust der Kunststoff-Schmelze gering ist.

Eine Siebwechselvorrichtung nach Anspruch 11 gewährleistet einen geringen Druckverlust. Durch die Grundform des jeweiligen Verbindungskanals wird eine große Querschnittsfläche bereitgestellt. Aus fertigungstechnischen Gründen können die Ecken der Grundform abgerundet sein.

Eine Siebwechselvorrichtung nach Anspruch 12 gewährleistet einen geringen Druckverlust der Kunststoff-Schmelze. Da sich der Zufuhrkanal in der Strömungsrichtung erweitert, wird der Druckverlust infolge des Durchströmens der Siebeinrichtung durch eine Vergrößerung der Querschnittsfläche reduziert. Vorzugsweise hat der Abfuhrkanal eine dem Zufuhrkanal entsprechende Form, wobei sich der Abfuhrkanal in der Strömungsrichtung im Querschnitt verjüngt.

Eine Siebwechselvorrichtung nach Anspruch 13 gewährleistet einen geringen Druckverlust. Dadurch, dass die Eintrittsfläche des jeweiligen Verbindungskanals zumindest deckungsgleich, also deckungsgleich oder größer als die Austrittsfläche des Zufuhrkanals ist, bildet das Gehäuse mit dem jeweiligen Schiebeelement keine Stauflächen aus, an denen sich die einströmende Kunststoff-Schmelze staut. Vorzugsweise ist eine Eintrittsfläche des Abfuhrkanals zumindest deckungsgleich, also deckungsgleich oder größer als eine Austrittsfläche des jeweiligen Verbindungskanals.

Der Erfindung liegt ferner die Aufgabe zugrunde, ein einfaches Verfahren zum Betreiben einer Siebwechselvorrichtung zu schaffen, die einfach aufgebaut ist und einen geringen Druckverlust der Kunststoff-Schmelze verursacht.

Diese Aufgabe wird durch ein Verfahren mit den Merkmalen des Anspruchs 14 gelöst. Die Vorteile des erfindungsgemäßen Verfahrens entsprechen den bereits beschriebenen Vorteilen der erfindungsgemäßen Siebwechselvorrichtung. Das Verfahren kann insbesondere auch mit den Merkmalen mindestens eines der Ansprüche 1 bis 13 weitergebildet werden.

Im Normalbetrieb befindet sich das erste Schiebeelement in seiner Betriebsposition, sodass der zugehörige Verbindungskanal fluchtend mit dem Zufuhrkanal und dem Abfuhrkanal angeordnet ist und die zu filtrierende Kunststoff-Schmelze durch die erste Siebeinrichtung gefördert wird. Mit fortwährendem Betrieb verstopft die erste Siebeinrichtung, sodass diese zur Wahrung eines geringen Druckverlusts der Kunststoff-Schmelze gewechselt werden muss. Zum Wechseln der ersten Siebeinrichtung werden die Schiebeelemente gemeinsam und dicht gegeneinander anliegend mittels einer Betätigungseinrichtung in einer Verlagerungsrichtung in der Führungsausnehmung verlagert. Während des Siebwechselvorgangs wird weiterhin Kunststoff-Schmelze durch den Zufuhrkanal zugeführt, die während der Verlagerungsbewegung in die Verbindungskanäle beider Schiebeelemente strömt, sodass beide Siebeinrichtungen die Kunststoff-Schmelze filtrieren. Der Druckverlust ist somit während des Siebwechselvorgangs gering. Befindet sich das zweite Schiebeelement in seiner Betriebsposition, in der der Verbindungskanal mit dem Zufuhrkanal und dem Abfuhrkanal fluchtet und die Kunststoff-Schmelze ausschließlich durch die zweite Siebeinrichtung des zweiten Schiebeelements gefördert wird, ist der Siebwechselvorgang abgeschlossen. Während sich das zweite Schiebeelement im Normalbetrieb befindet, wird nun das erste Schiebeelement mittels der Betätigungseinrichtung in der Verlagerungsrichtung derart verschoben, dass die verstopfte erste Siebeinrichtung zur Wartung außerhalb der Führungsausnehmung angeordnet ist. Die Siebeinrichtung kann nun gewartet bzw. gereinigt werden. Ist die Siebeinrichtung des zweiten Schiebeelements verstopft, so erfolgt in der beschriebenen Weise ein erneuter Siebwechsel mit einer anschließenden Wartung der verstopften zweiten Siebeinrichtung.

Weitere Merkmale, Vorteile und Einzelheiten der Erfindung ergeben sich aus der nachfolgenden Beschreibung mehrerer Ausführungsbeispiele. Es zeigen:
- Fig. 1: eine schematische Schnittdarstellung einer Siebwechselvorrichtung zum Filtrieren einer Kunststoff-Schmelze gemäß einem ersten Ausführungsbeispiel mit einem in einer Betriebsposition befindlichen ersten Schiebeelement und einem separaten zweiten Schiebeelement,
- Fig. 2: eine perspektivische Ansicht eines der Schiebeelemente in Fig. 1,
- Fig. 3: eine schematische Schnittdarstellung der Siebwechselvorrichtung in Fig. 1 zu Beginn eines Siebwechselvorgangs,
- Fig. 4: eine schematische Schnittdarstellung der Siebwechselvorrichtung in Fig. 1 während des Siebwechselvorgangs,
- Fig. 5: eine schematische Schnittdarstellung der Siebwechselvorrichtung in Fig. 1 nach Abschluss des Siebwechselvorgangs,
- Fig. 6: eine schematische Schnittdarstellung der Siebwechselvorrichtung in Fig. 1 mit dem in einer Wartungsposition befindlichen ersten Schiebeelement und dem in der Betriebsposition befindlichen zweiten Schiebeelement, und
- Fig. 7: eine schematische Frontansicht einer Siebwechselvorrichtung gemäß einem zweiten Ausführungsbeispiel.

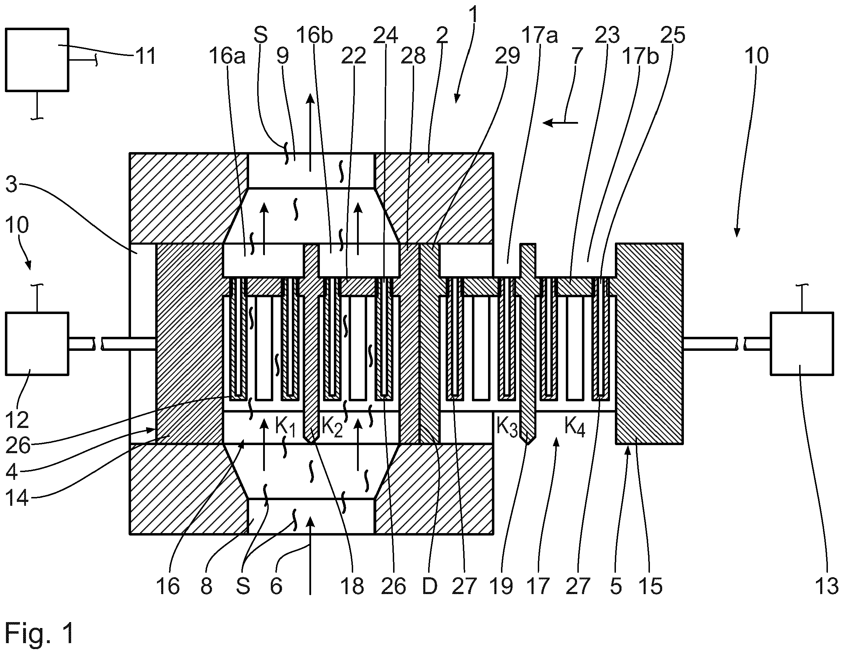

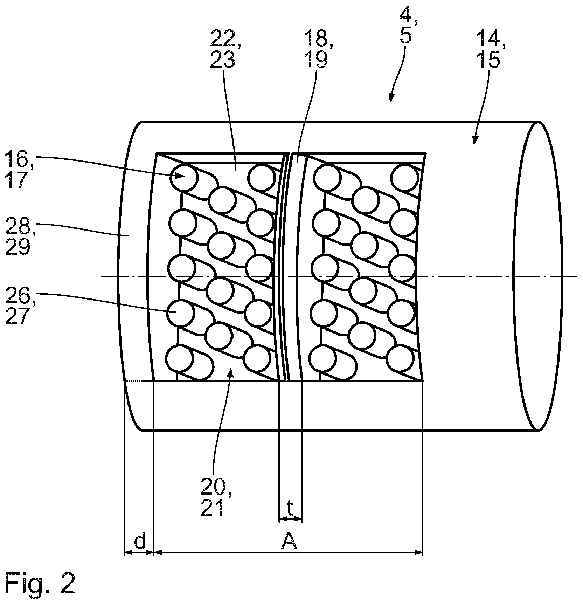

Nachfolgend ist anhand der Fig. 1 bis 6 ein erstes Ausführungsbeispiel der Erfindung beschrieben. Eine Siebwechselvorrichtung 1 umfasst ein Gehäuse 2, in dem eine Führungsausnehmung 3 zum Aufnehmen und Führen eines ersten Schiebeelements 4 und eines zweiten Schiebeelements 5 ausgebildet ist. Die Führungsausnehmung 3 verläuft senkrecht zu einer Strömungsrichtung 6 einer zu filtrierenden Kunststoff-Schmelze S und definiert eine senkrecht zu der Strömungsrichtung 6 verlaufende Verlagerungsrichtung 7 der Schiebeelemente 4, 5. An einer zu der Führungsausnehmung 3 stromaufwärtigen Seite ist in dem Gehäuse 2 ein Zufuhrkanal 8 zum Zuführen der Kunststoff-Schmelze S ausgebildet, der in die Führungsausnehmung 3 mündet. Der Zufuhrkanal 8 erweitert sich im Querschnitt in der Strömungsrichtung 6. An einer zu der Führungsausnehmung 3 stromabwärtigen Seite ist in dem Gehäuse 2 ein Abfuhrkanal 9 zum Abführen der filtrierten Kunststoff-Schmelze S ausgebildet, der in die Führungsausnehmung 3 mündet. Der Abfuhrkanal 9 verjüngt sich in der Strömungsrichtung 6 im Querschnitt und weist eine dem Zufuhrkanal 8 entsprechende Form auf. Der Zufuhrkanal 8 und der Abfuhrkanal 9 verlaufen in der Strömungsrichtung 6 und sind konzentrisch zueinander angeordnet.

Die Führungsausnehmung 3 erstreckt sich in der Verlagerungsrichtung 7 durch das Gehäuse 2. Die Schiebeelemente 4, 5 sind in der Verlagerungsrichtung 7 nebeneinander in der gemeinsamen Führungsausnehmung 3 lagerbar angeordnet. Zum Verlagern der Schiebeelemente 4, 5 weist die Siebwechselvorrichtung 1 eine Betätigungseinrichtung 10 und eine Steuereinrichtung 11 auf. Die Betätigungseinrichtung 10 umfasst einen ersten Betätigungsantrieb 12, der ausschließlich mit dem ersten Schiebeelement 4 gekoppelt ist, und einen zweiten Betätigungsantrieb 13, der ausschließlich mit dem zweiten Schiebeelement 5 gekoppelt ist. Die Betätigungsantriebe 12, 13 sind beispielsweise als hydraulische Kolben-Zylinder-Einheiten ausgebildet. Die Betätigungsantriebe 12, 13 sind in Signalverbindung mit der Steuereinrichtung 11 und sind unabhängig voneinander ansteuerbar. Mittels der Steuereinrichtung 11 sind die Betätigungsantriebe 12, 13 wahlweise gemeinsam oder ausschließlich der erste Betätigungsantrieb 12 oder ausschließlich der zweite Betätigungsantrieb 13 betreibbar. Die Steuereinrichtung 11 ist derart ausgebildet, dass in einem Siebwechselmodus die Schiebeelemente 4, 5 gemeinsam in der Führungsausnehmung 3 mittels der Betätigungseinrichtung 10 verlagerbar sind, und dass in einem Wartungsmodus ausschließlich das erste Schiebeelement 4 oder ausschließlich das zweite Schiebeelement 5 in der Führungsausnehmung 3 mittels der Betätigungseinrichtung 10 verlagerbar ist.

Die Schiebeelemente 4, 5 weisen jeweils einen Grundkörper 14, 15 auf, in dem jeweils ein Verbindungskanal 16, 17 ausgebildet ist, der zum Verbinden des Zufuhrkanals 8 mit dem Abfuhrkanal 9 in der Strömungsrichtung 6 durch den jeweiligen Grundkörper 14, 15 verläuft. Die Grundkörper 14, 15 liegen in der Führungsausnehmung 3 dicht gegen das Gehäuse 2 an. Die Verbindungskanäle 16, 17 haben im Querschnitt die Grundform eines Rechtecks. Die Ecken des Rechtecks können aus fertigungstechnischen Gründen abgerundet sein.

In den Verbindungskanälen 16, 17 ist jeweils eine Trennwand 18, 19 mittig angeordnet, sodass der jeweilige Verbindungskanal 16, 17 in zwei Teil-Verbindungskanäle 16a und 16b bzw. 17a und 17b unterteilt ist. Die Trennwände 18, 19 verlaufen jeweils in der Strömungsrichtung 6 und verjüngen sich in Richtung zu dem Zufuhrkanal 8 im Querschnitt.

Zum Filtrieren der Kunststoff-Schmelze S ist in den Verbindungskanälen 16, 17 jeweils eine Siebeinrichtung 20, 21 angeordnet. Die Siebeinrichtungen 20, 21 umfassen jeweils ein Tragelement 22, 23, das in dem zugehörigen Verbindungskanal 16, 17 senkrecht zu der Strömungsrichtung 6 angeordnet ist und eine Vielzahl von in der Strömungsrichtung 6 verlaufenden Durchgangsöffnungen 24, 25 aufweist. In die Durchgangsöffnungen 24 bzw. 25 sind zugehörige Filter 26 bzw. 27 lösbar eingeschraubt. Die Filter 26, 27 sind beispielsweise als übliche Filterkerzen bzw. Filterpatronen ausgebildet.

Der in der Strömungsrichtung 6 vor den ersten Filtern 26 angeordnete Abschnitt des Teil-Verbindungskanals 16a ist nachfolgend als erste Kavität K₁ bezeichnet. Entsprechend ist der in der Strömungsrichtung 6 vor den ersten Filtern 26 angeordnete Abschnitt des Teil-Verbindungskanals 16b nachfolgend als zweite Kavität K₂ bezeichnet. Der in der Strömungsrichtung 6 vor den zweiten Filtern 27 angeordnete Abschnitt des Teil-Verbindungskanals 17a ist nachfolgend als dritte Kavität K₃ bezeichnet. Entsprechend ist der in der Strömungsrichtung 6 vor den zweiten Filtern 27 angeordnete Abschnitt des Teil-Verbindungskanals 17b als vierte Kavität K₄ bezeichnet.

Die Grundkörper 14, 15 der Schiebeelemente 4, 5 bilden jeweils eine in der Strömungsrichtung 6 verlaufende und senkrecht zu der Verlagerungsrichtung 7 angeordnete Dichtwand 28, 29 aus. Die Schiebeelemente 4, 5 sind derart in der Führungsausnehmung 3 angeordnet, dass die Dichtwände 28, 29 benachbart zueinander angeordnet sind. In einem aneinander liegenden Zustand bilden die Dichtwände 28, 29 eine Dichtfläche D für die Kunststoff-Schmelze S aus, sodass diese nicht zwischen die Dichtwände 28, 29 strömen kann. Die Schiebeelemente 4, 5 sind vorzugsweise baugleich.

Die Verbindungskanäle 16, 17 weisen in der Verlagerungsrichtung 7 eine maximale Abmessung A auf. Die Trennwände 18, 19 weisen in der Verlagerungsrichtung 7 eine Wanddicke t auf, wobei für die Wanddicke t im Verhältnis zu der Abmessung A gilt: 0,0125 ≤ t/A ≤ 0,2, insbesondere 0,025 ≤ t/A ≤ 0,15, und insbesondere 0,05 ≤ t/A ≤ 0,1. Weiterhin weisen die Dichtwände 28, 29 in der Verlagerungsrichtung 7 eine Wanddicke d auf, wobei für die Wanddicke d im Verhältnis zu der Abmessung A gilt: 0,0125 ≤ d/A ≤ 0,2, insbesondere 0,025 ≤ d/A ≤ 0,15, und insbesondere 0,05 ≤ d/A ≤ 0,1.

Um eine möglichst staufreie Strömung der Kunststoff-Schmelze S zu gewährleisten, ist eine Eintrittsfläche der Verbindungskanäle 16, 17 deckungsgleich mit einer Austrittsfläche des Zufuhrkanals 8 und eine Eintrittsfläche des Abfuhrkanals 9 deckungsgleich mit einer Austrittsfläche des jeweiligen Verbindungskanals 16, 17.

Nachfolgend ist die Betriebsweise der Siebwechselvorrichtung 1 beschrieben. In Fig. 1 ist das erste Schiebeelement 4 in seiner Betriebsposition, sodass die Kunststoff-Schmelze S durch den Zufuhrkanal 6 in die Kavitäten K₁ und K₂ strömt und beim Durchströmen der ersten Filter 26 filtriert wird. Die filtrierte Kunststoff-Schmelze S strömt anschließend durch die ersten Durchgangsöffnungen 24 in den Abfuhrkanal 9 und wird dort aus der Siebwechselvorrichtung 1 abgeführt. Das zweite Schiebeelement 5 befindet sich in einer betriebsbereiten Position. Die zweite Dichtwand 29 liegt gegen die erste Dichtwand 28 an. Die zweiten Filter 27 sind betriebsbereit.

Sind die ersten Filter 26 verstopft, so wird von der Steuereinrichtung 11 ein Siebwechselvorgang eingeleitet. Ein verstopfter Zustand der ersten Filter 26 wird beispielsweise erkannt, indem der Druckverlust der Kunststoff-Schmelze S zwischen dem Zufuhrkanal 8 und dem Abfuhrkanal 9 gemessen wird. Zum Siebwechsel werden die Schiebeelemente 4, 5 gemeinsam mittels der Betätigungseinrichtung 10 in der Verlagerungsrichtung 7 verlagert. Hierbei liegen die Dichtwände 28, 29 dicht gegeneinander an, sodass keine Kunststoff-Schmelze S von dem Zufuhrkanal 8 zwischen die Dichtwände 28, 29 strömen kann. Zum Verlagern der beiden Schiebeelemente 4, 5 werden beispielsweise beide Betätigungsantriebe 12, 13 von der Steuereinrichtung 11 angesteuert, sodass der erste Betätigungsantrieb 12 das erste Schiebeelement 4 zieht und der zweite Betätigungsantrieb 14 das zweite Schiebeelement 5 schiebt. Die Schiebeelemente 4, 5 werden insbesondere derart gemeinsam verlagert, dass die Dichtwände 28, 29 zu jeder Zeit dicht gegeneinander anliegen.

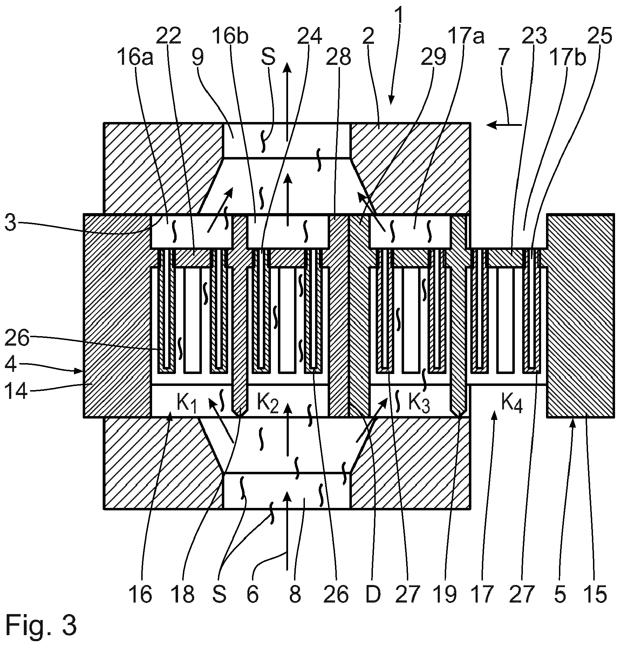

Fig. 3 zeigt die Schiebeelemente 4, 5 zu Beginn des Siebwechselvorgangs. Die Schiebeelemente 4, 5 sind derart verlagert, dass die Kunststoff-Schmelze S in die Kavitäten K₁, K₂ und K₃ einströmt, wobei die Kunst-stoff-Schmelze S in der Kavität K₃ durch die betriebsbereiten zweiten Filter 27 und die zweiten Durchgangsöffnungen 25 strömt und anschließend durch den Abfuhrkanal 9 abgeführt wird. Hierdurch wird während des Siebwechselvorgangs ein geringer Druckverlust der Kunststoff-Schmelze S gewährleistet. Die Anordnung der Trennwände 18 und 19 und das Gehäuse 2 sind derart aufeinander abgestimmt, dass die Kunststoff-Schmelze S nicht aus der ersten Kavität K₁ und/oder der dritten Kavität K₃ durch die Führungsausnehmung 3 aus dem Gehäuse 2 austreten kann.

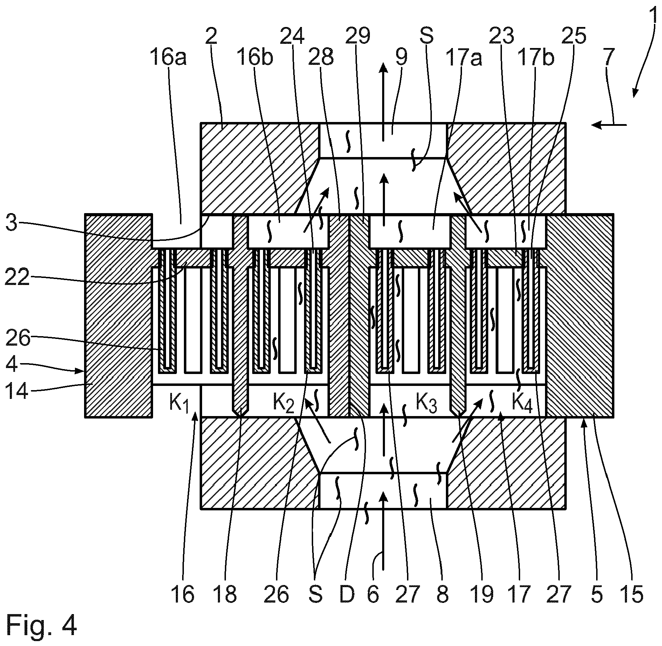

Fig. 4 zeigt die Siebwechselvorrichtung 1 in einem Zustand vor Abschluss des Siebwechselvorgangs. Die Schiebeelemente 4, 5 sind derart fortgeschritten in der Verlagerungsrichtung 7 verlagert, dass die Kunststoff-Schmelze S bei dem Schiebeelement 4 lediglich noch in die Kavität K₂ einströmt, wohingegen die Kunststoff-Schmelze S bei dem Schiebeelement 5 bereits in die Kavitäten K₃ und K₄ einströmt. Durch die abgestimmte Anordnung der Trennwände 18, 19 relativ zu dem Gehäuse 2 ist gewährleistet, dass die in die Kavität K₂ und in die Kavität K₄ einströmende Kunststoff-Schmelze nicht durch die Führungsausnehmung 3 aus dem Gehäuse 2 austreten kann. In die Kavität K₁ ist ein Einströmen der Kunststoff-Schmelze S nicht mehr möglich.

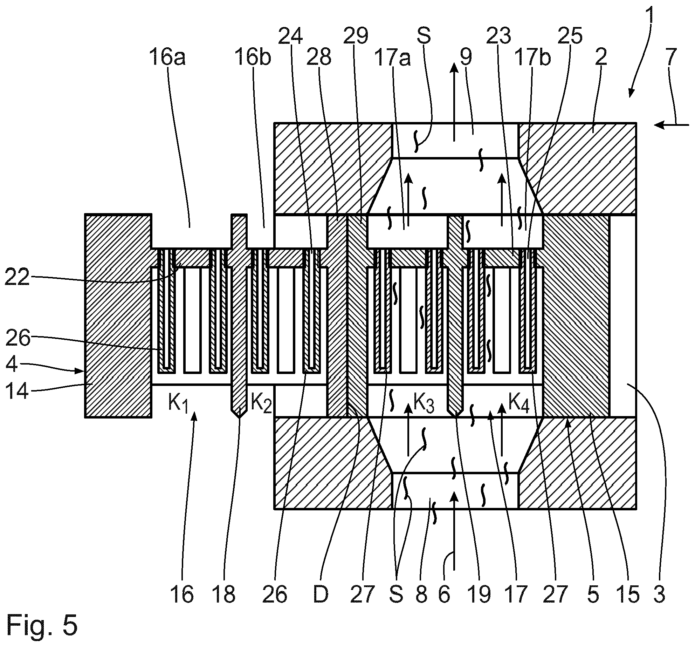

In Fig. 5 ist der Siebwechselvorgang abgeschlossen und das zweite Schiebeelement 5 befindet sich in seiner Betriebsposition, sodass die durch den Zufuhrkanal 8 strömende Kunststoff-Schmelze S ausschließlich in die Kavität K₃ und in die Kavität K₄ einströmt. Die Kunststoff-Schmelze S wird ausschließlich mittels der betriebsbereiten, also nicht verstopften zweiten Filter 27 filtriert. Die filtrierte Kunststoff-Schmelze S strömt durch die zweiten Durchgangsöffnungen 25 und wird anschließend durch den Abfuhrkanal 9 abgeführt.

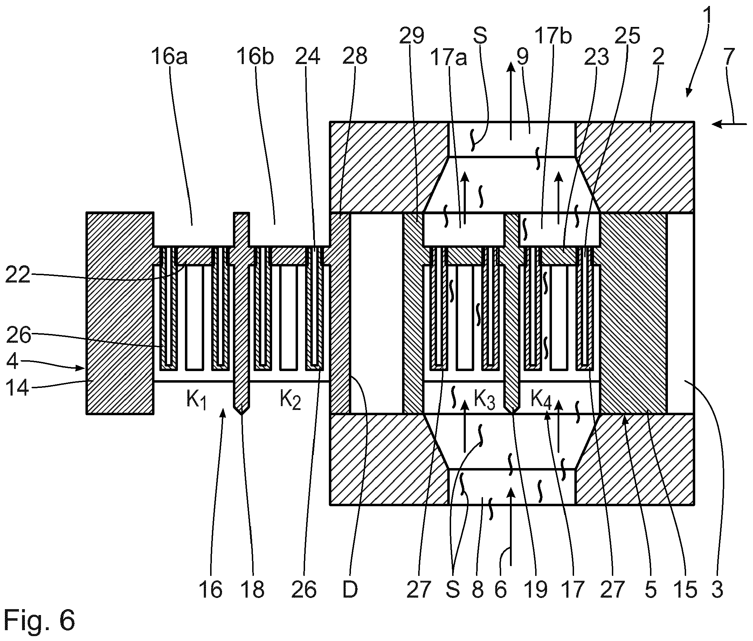

Während sich das zweite Schiebeelement 5 in einem Normalbetrieb in seiner Betriebsposition befindet, wird das erste Schiebeelement 4 nun in eine Wartungsposition überführt. Hierzu steuert die Steuereinrichtung 11 die Betätigungseinrichtung 10 in einem Wartungsmodus derart an, dass mittels des ersten Betätigungsantriebs 12 ausschließlich das erste Schiebeelement 4 in der Verlagerungsrichtung 7 verlagert wird und die erste Siebeinrichtung 20 außerhalb der Führungsausnehmung 3 angeordnet wird und frei zugänglich ist, jedoch der erste Grundkörper 14 teilweise noch in der Führungsausnehmung 3 verbleibt. Dies ist in Fig. 6 dargestellt. Die ersten Filter 26 werden in der Wartungsposition von dem ersten Tragelement 22 gelöst und entweder nach einer Reinigung wieder an dem ersten Tragelement 22 befestigt oder durch betriebsbereite Filter 26 ersetzt.

Nach Abschluss der Wartung wird das erste Schiebeelement 4 in eine betriebsbereite Position gebracht, indem das erste Schiebeelement 4 mittels des ersten Betätigungsantriebs 12 derart verlagert wird, dass die erste Dichtwand 28 gegen die zweite Dichtwand 29 anliegt. Sind die zweiten Filter 27 verstopft, wiederholt sich der Siebwechselvorgang in entsprechender Weise.

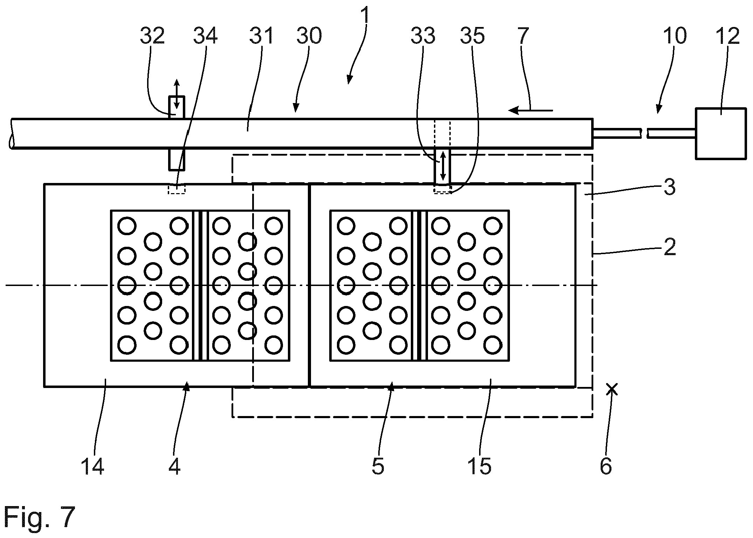

Nachfolgend ist anhand von Fig. 7 ein zweites Ausführungsbeispiel der Erfindung beschrieben. Im Unterschied zu dem ersten Ausführungsbeispiel weist die Betätigungseinrichtung 10 lediglich einen Betätigungsantrieb 12 auf, der mittels einer Kopplungsmechanik 30 wahlweise mit ausschließlich dem ersten Schiebeelement 4 oder ausschließlich dem zweiten Schiebeelement 5 oder beiden Schiebeelementen 4, 5 koppelbar ist. Die Kopplungsmechanik 30 weist einen Steuerkolben 31 auf, der verlagerbar mit dem Betätigungsantrieb 12 gekoppelt ist. An dem Steuerkolben 31 ist für jedes der Schiebeelemente 4, 5 ein Koppelelement 32, 33 angeordnet. Die Koppelelemente 32, 33 sind mittels der Steuereinrichtung 11 unabhängig voneinander betätigbar, sodass wahlweise ausschließlich das erste Schiebeelement 4 mittels des Koppelelements 32 oder ausschließlich das zweite Schiebeelement 5 mittels des Koppelelements 33 oder beide Schiebeelemente 4, 5 mittels der Koppelelemente 32, 33 mit dem Steuerkolben 31 koppelbar bzw. entkoppelbar sind. Hierdurch können die Schiebeelemente 4, 5 für einen Siebwechselvorgang gemeinsam verlagert werden und zur Überführung des jeweiligen Schiebeelements 4, 5 in eine Wartungsposition unabhängig voneinander verlagert werden. Die Koppelelemente 32, 33 sind beispielsweise als Bolzen oder Nocken ausgebildet, die in eine entsprechende Ausnehmung 34, 35 in dem jeweiligen Grundkörper 14, 15 eingreifen. Hinsichtlich des weiteren Aufbaus und der Betriebsweise wird auf die Beschreibung des ersten Ausführungsbeispiels verwiesen.

Die erfindungsgemäße Siebwechselvorrichtung 1 ermöglicht einen einfachen Siebwechsel, bei dem keine unerwünschten Druckspitzen auftreten und der Durchsatz der Kunststoff-Schmelze S während des Siebwechsels nicht reduziert werden muss. Dadurch, dass während des Siebwechsels immer eine ausreichende Filterfläche in Betrieb ist und infolgedessen unerwünschte Druckspitzen nicht auftreten, kann die Verlagerung der Schiebeelemente 4, 5 mit einer geringen Verlagerungsgeschwindigkeit erfolgen, wodurch die Betätigungseinrichtung 10 vergleichsweise klein dimensioniert werden kann und somit im Aufbau einfach ist. Durch die vergleichsweise geringe Verlagerungsgeschwindigkeit sowie eine vergleichsweise geringe Beschleunigung können unerwünscht hohe Querkräfte auf die Filter 26, 27 und somit eine Beschädigung der Filter 26, 27 vermieden werden. Auch Querkräfte infolge eines schrägen Einströmens der Kunststoff-Schmelze S in Verbindung mit auftretenden Druckspitzen können vermieden werden. Hierdurch können die Filter 26, 27 mit Stützelementen aufgebaut werden, die eine vergleichsweise geringe Wandstärke haben, wodurch der Druckverlust der Kunststoff-Schmelze S reduziert wird. Durch die rechteckige Querschnittsform der Verbindungskanäle 16, 17 wird eine große Querschnittsfläche in Verbindung mit einer schmalen erforderlichen Baubreite des Gehäuses 2 erzielt.

## Patentansprüche

1. Siebwechselvorrichtung zum Filtrieren einer Kunststoff-Schmelze mit
- einem Gehäuse (2),
- einer Führungsausnehmung (3), die in dem Gehäuse (2) ausgebildet und quer zu einer Strömungsrichtung (6) der Kunststoff-Schmelze (S) angeordnet ist,
- einem Zufuhrkanal (8) und einem Abfuhrkanal (9), die in dem Gehäuse (2) ausgebildet sind und in die Führungsausnehmung (3) münden,
**dadurch gekennzeichnet,**
**dass** in der Führungsausnehmung (3) ein erstes Schiebelement (4) und ein zweites Schiebeelement (5) quer zu der Strömungsrichtung (6) nebeneinander angeordnet sind,
**dass** jedes der Schiebeelemente (4, 5) einen Verbindungskanal (16, 17) zum Verbinden des Zufuhrkanals (8) mit dem Abfuhrkanal (9) ausbildet und in jedem Verbindungskanal (16, 17) eine Siebeinrichtung (20, 21) zum Filtrieren der Kunststoff-Schmelze (S) angeordnet ist.

2. Siebwechselvorrichtung nach Anspruch 1, **dadurch gekennzeichnet,**
**dass** jedes Schiebeelement (4, 5) eine dem benachbarten Schiebeelement (4, 5) zugewandte Dichtwand (28, 29) aufweist, die den jeweiligen Verbindungskanal (16, 17) in der Strömungsrichtung (6) seitlich begrenzt.

3. Siebwechselvorrichtung nach Anspruch 2, **dadurch gekennzeichnet,**
**dass** jede Dichtwand (28, 29) in einer Verlagerungsrichtung (7) des Schiebeelements (4, 5) eine Wanddicke d hat und für die Wanddicke d im Verhältnis zu einer maximalen Abmessung A des Verbindungskanals (16, 17) in der Verlagerungsrichtung (7) gilt: 0,0125 ≤ d/A < 0,2, insbesondere 0,025 ≤ d/A ≤ 0,15, und insbesondere 0,05 ≤ d/A ≤ 0,1.

4. Siebwechselvorrichtung nach einem der Ansprüche 1 bis 3, **gekennzeichnet,**
**durch** eine Betätigungseinrichtung (10), die derart ausgebildet ist, dass die Schiebeelemente (4, 5) wahlweise gemeinsam oder unabhängig voneinander in der Führungsausnehmung (3) verlagerbar sind.

5. Siebwechselvorrichtung nach einem der Ansprüche 1 bis 4, **dadurch gekennzeichnet,**
**dass** eine Betätigungseinrichtung (10) zum Verlagern der Schiebeelemente (4, 5) in der Führungsausnehmung (3) einen Betätigungsantrieb (12, 13) für jedes Schiebeelement (4, 5) umfasst.

6. Siebwechselvorrichtung nach einem der Ansprüche 1 bis 4, **dadurch gekennzeichnet,**
**dass** eine Betätigungseinrichtung (10) zum Verlagern der Schiebeelemente (4, 5) in der Führungsausnehmung (3) einen Betätigungsantrieb (12) und eine Kopplungsmechanik (30) zum wahlweisen Koppeln mindestens eines Schiebeelements (4, 5) mit dem Betätigungsantrieb (12) umfasst.

7. Siebwechselvorrichtung nach einem der Ansprüche 1 bis 6, **gekennzeichnet,**
**durch** eine Steuereinrichtung (11), die derart ausgebildet ist,
dass in einem Siebwechselmodus die Schiebeelemente (4, 5) gemeinsam in der Führungsausnehmung (3) mittels einer Betätigungseinrichtung (10) verlagerbar sind, und
dass in einem Wartungsmodus eines der Schiebeelement (4, 5) in der Führungsausnehmung (3) mittels der Betätigungseinrichtung (10) verlagerbar ist.

8. Siebwechselvorrichtung nach einem der Ansprüche 1 bis 7, **dadurch gekennzeichnet,**
**dass** in jedem Verbindungskanal (16, 17) mindestens eine in der Strömungsrichtung (6) verlaufende Trennwand (18, 19) angeordnet ist, die den jeweiligen Verbindungskanal (16, 17) in mehrere Teil-Verbindungskanäle (16a, 16b, 17a, 17b) unterteilt.

9. Siebwechselvorrichtung nach Anspruch 8, **dadurch gekennzeichnet, dass** jede Trennwand (18, 19) in einer Verlagerungsrichtung (7) des Schiebeelements (4, 5) eine Wanddicke t hat und für die Wanddicke t im Verhältnis zu einer maximalen Abmessung A des Verbindungskanals (16, 17) in der Verlagerungsrichtung (7) gilt: 0,0125 ≤ t/A ≤ 0,2, insbesondere 0,025 ≤ t/A ≤ 0,15, und insbesondere 0,05 ≤ t/A ≤ 0,1.

10. Siebwechselvorrichtung nach Anspruch 8 oder 9, **dadurch gekennzeichnet,**
**dass** jede Trennwand (18, 19) sich in Richtung zu dem Zufuhrkanal (8) im Querschnitt verjüngt.

11. Siebwechselvorrichtung nach einem der Ansprüche 1 bis 10, **dadurch gekennzeichnet,**
**dass** jeder Verbindungskanal (16, 17) im Querschnitt die Grundform eines Rechtecks hat.

12. Siebwechselvorrichtung nach einem der Ansprüche 1 bis 11, **dadurch gekennzeichnet,**
**dass** sich der Zufuhrkanal (8) in der Strömungsrichtung (6) im Querschnitt erweitert.

13. Siebwechselvorrichtung nach einem der Ansprüche 1 bis 12, **dadurch gekennzeichnet,**
**dass** eine Eintrittsfläche des jeweiligen Verbindungskanals (16, 17) zumindest deckungsgleich mit einer Austrittsfläche des Zufuhrkanals (8) ist.

14. Verfahren zum Betreiben einer Siebwechselvorrichtung mit den Schritten:
- Bereitstellen einer Siebwechselvorrichtung (1) zum Filtrieren einer Kunststoff-Schmelze (S) mit
-- einem Gehäuse (2),
-- einer Führungsausnehmung (3), die in dem Gehäuse (2) ausgebildet und quer zu einer Strömungsrichtung (6) der Kunststoff-Schmelze (S) angeordnet ist,
-- einem Zufuhrkanal (8) und einem Abfuhrkanal (9), die in dem Gehäuse (2) ausgebildet sind und in die Führungsausnehmung (3) münden,
-- einem ersten Schiebeelement (4) und einem zweiten Schiebelement (5), die in der Führungsausnehmung (3) quer zu der Strömungsrichtung (6) nebeneinander angeordnet sind, wobei jedes der Schiebeelemente (4, 5) einen Verbindungskanal (16, 17) zum Verbinden des Zufuhrkanals (8) mit dem Abfuhrkanal (9) ausbildet und in jedem Verbindungskanal (16, 17) eine Siebeinrichtung (20, 21) zum Filtrieren der Kunststoff-Schmelze (S) angeordnet ist,
- Filtrieren der Kunststoff-Schmelze (S) derart, dass die Kunststoff-Schmelze (S) von dem Zufuhrkanal (8) durch den Verbindungskanal (16) und die Siebeinrichtung (20) des ersten Schiebeelements (4) zu dem Abfuhrkanal (9) gefördert wird,
- Wechseln der Siebeinrichtung (20) derart, dass die Schiebeelemente (4, 5) gemeinsam und dicht gegeneinander anliegend in einer Verlagerungsrichtung (7) in der Führungsausnehmung (3) verlagert werden, und
- Filtrieren der Kunststoff-Schmelze (S) derart, dass die Kunststoff-Schmelze (S) von dem Zufuhrkanal (8) durch den Verbindungskanal (17) und die Siebeinrichtung (21) des zweiten Schiebeelements (5) zu dem Abfuhrkanal (9) gefördert wird, und
- Verlagern des ersten Schiebeelements (4) in der Verlagerungsrichtung (7) derart, dass die Siebeinrichtung (20) zur Wartung außerhalb der Führungsausnehmung (3) angeordnet ist.
